(19) Europäisches Patentamt
European Patent Office
Office européen des brevets

(11) **EP 2 103 906 A1**

(12) **EUROPEAN PATENT APPLICATION**
published in accordance with Art. 153(4) EPC

(43) Date of publication:
**23.09.2009 Bulletin 2009/39**

(51) Int Cl.:
**G01C 21/00** *(2006.01)*　　　**G08G 1/0969** *(2006.01)*

(21) Application number: **07706687.6**

(86) International application number:
**PCT/JP2007/050345**

(22) Date of filing: **12.01.2007**

(87) International publication number:
**WO 2008/084553 (17.07.2008 Gazette 2008/29)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Pioneer Corporation**
**Tokyo 153-8654 (JP)**

(72) Inventors:
• **NAMBATA, Ippei**
**Kawagoe-shi**
**Saitama 350-8555 (JP)**

• **KUSUMOTO, Yuuki**
**Kawagoe-shi**
**Saitama 350-8555 (JP)**
• **KODAKA, Takeshi**
**Tokyo 153-8654 (JP)**
• **CHIBA, Takao**
**Tokyo 153-8654 (JP)**

(74) Representative: **Haley, Stephen**
**Gill Jennings & Every LLP**
**Broadgate House**
**7 Eldon Street**
**London Derbyshire EC2M 7LH (GB)**

(54) **INFORMATION PROCESSOR, INFORMATION PROCESSING METHOD, INFORMATION PROCESSING PROGRAM, AND COMPUTER-READABLE RECORDING MEDIUM**

(57) An update information input unit (101) receives update information on updating of map information. A calculating unit (102) calculates a ratio of information to be updated in the map information based on the update information received by the update information input unit (101). A generating unit (103) generates update ratio information indicating the ratio calculated by the calculating unit (102). An output unit (104) outputs the update ratio information generated by the generating unit (103) to a device that uses the map information.

## FIG.1

**Description**

TECHNICAL FIELD

The present invention is related to an information processing apparatus, an information processing method, an information processing program, and a computer-readable recording medium. However, the application of the invention is not limited to the information processing apparatus, the information processing method, the information processing program, and the computer-readable recording medium.

BACKGROUND ART

A conventional car navigation apparatus that navigates a car to a destination retrieves an optimal route to the destination and guides a driver along the retrieved route by means of map display or audio guidance in order for the car to reach the destination.

Such a car navigation apparatus needs to have the latest map data in order to conduct a path search correctly. Map data needs to be updated because of new roads and buildings, changes in the names of places caused by a municipal merger, changes of traffic regulations, and so on.

One example of a proposed method involves an information providing center informing a navigation unit of update data so that the update data can be downloaded or installed immediately when navigation information is updated at the information providing center (see, for example, Patent Document 1 below).

Another method proposes that when the ratio of a total number of road information items not used for database updating to a total number of road information items used for database updating exceeds a given value, a road information learning system determines that a road map had changed. When it is determined that the road map has changed, the old database is discarded and a new database is created based on new road information (see, for example, Patent Document 2 below).

Patent Document 1: Japanese Laid-Open Patent Application Publication No. 2004-012319
Patent Document 2: Japanese Laid-Open Patent Application Publication No. 2005-91071

DISCLOSURE OF INVENTION

PROBLEM TO BE SOLVED BY THE INVENTION

However, according to Patent Document 1, when the update data is added at the information providing center, the information providing center informs a user of the update data to enable the user to download or install the update data, urging the user to update the navigation information. Consequently, the user is urged to update the navigation information even if the changes are minor and the navigation unit works well without the update; hence, the user spends unnecessary time and money for update processing.

Further, even if changes are so important that lack of updating is detrimental to the navigation service, the user is informed in the same way as for minor changes. Consequently, when the user handles other operations before the update processing of the navigation information, the user may be annoyed by incorrect navigation.

According to Patent Document 2, the database is updated when it is determined that the road map has changed. Consequently, when it is determined that the road map has not changed, even if the changes are important for the user, the database is not updated; hence, the user is forced to refer to the old database.

On the other hand, even when it is determined that the road map has changed but the changes are not important for the user, the user spends unnecessary time and money to update the database to reflect the changes.

MEANS FOR SOLVING PROBLEM

An information processing apparatus according to the invention of claim 1 includes an input unit configured to receive update information on updating of map information; a calculating unit configured to calculate a ratio of information to be updated in the map information based on the update information; a generating unit configured to generate update ratio information indicating the ratio calculated by the calculating unit; an output unit configured to output the update ratio information generated by the generating unit to a device that uses the map information.

An information processing method according to the invention of claim 10 includes a receiving step of receiving update information on updating of map information; a calculating step of calculating a ratio of information to be updated in the map information based on the update information receiving at the receiving step; a generating step of generating update ratio information indicating the ratio calculated at the calculating step; an outputting step of outputting the update ratio information generated at the generating step to a device that uses the map information.

An information processing program according to the invention of claim 11 causes a computer to perform the information processing method according to claim 10.

A computer-readable recording medium according to the invention of claim 12 stores therein the information processing program according to claim 11.

BRIEF DESCRIPTION OF DRAWINGS

Fig. 1 is a block diagram depicting one example of a functional structure of an information processing apparatus according to one embodiment;
Fig. 2 is a flowchart of processing of the information processing apparatus;
Fig. 3 is a block diagram depicting one example of a hardware structure of a map data server according to Example 1;
Fig. 4 is a diagram depicting one example of display data representing an update ratio in the map data server according to Example 1;
Fig. 5 is a flowchart depicting processing of the map data server;
Fig. 6 is a diagram of one example of display data depicting the update ratio of the map data server according to Example 1;
Fig. 7 is a diagram depicting one example of guide data for the updating of map data, according to Example 2;
Fig. 8 is a flowchart of processing of the map data server according to Example 2;
Fig. 9 is a diagram of another example of guide data for updating map data, according to Example 2;
Fig. 10 is a diagram of another example of guide data for updating map data, according to Example 2;
Fig. 11 is a diagram of one example of guide data for updating map data, according to Example 3;
Fig. 12 is a diagram of one example of guide data, according to Example 3; and
Fig. 13 is a flowchart of processing of the map data server according to Example 3.

EXPLANATIONS OF LETTERS OR NUMERALS

100     information processing apparatus
101     update input unit
102     calculating unit
103     generating unit
104     output unit
105     device information input unit

BEST MODE(S) FOR CARRYING OUT THE INVENTION

With reference to the drawings, preferred embodiments for an information processing apparatus, an information processing method, an information processing program, and a computer-readable recording medium will be explained.

(Embodiments)

(Functional configuration of information processing apparatus)

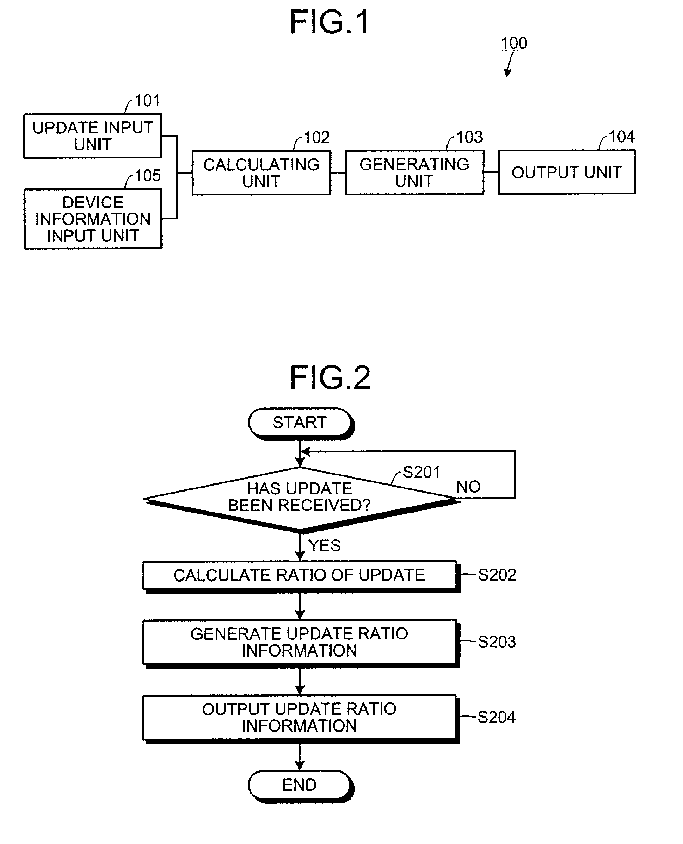

With reference to Fig. 1, a functional configuration of an information processing apparatus according to an embodiment will be explained. Fig. 1 is a block diagram depicting one example of a functional structure of the information processing apparatus according to one embodiment.

As depicted in Fig. 1, an information processing apparatus 100 includes an update input unit 101, a calculating unit 102, a generating unit 103, an output unit 104, and a device information input unit 105.

The update input unit 101 receives update information concerning map information. The update information is, for example, the latest map information for updating the map information or information designating an object to be updated in the map information.

The calculating unit 102 calculates a ratio of the update information to the map information based on the update information received by the update input unit 101. For instance, the ratio is a ratio of an amount of to-be-updated information which is calculated by comparison between not-yet-updated map information stored in a storing unit (not depicted) and the to-be-updated map information.

Specifically, the calculating unit 102 may calculate the ratio of the to-be-updated information for each area in the map information. The areas may be separated by boundaries of municipalities or frequencies of movement based on a history of the user's movements.

Further, the calculating unit 102 may calculate the ratio of the to-be-updated information for each type of data in the map information. A type of data is, for example, detailed data indicating a point on a map, data concerning roads, data concerning backgrounds.

Furthermore, the calculating unit 102 may calculate the ratio of the to-be-updated information based on a date of update included in device information received by the device information input unit 105 explained later.

The generating unit 103 generates update ratio information that indicates the ratio of the to-be-updated information calculated by the calculating unit 102. Specifically, the generating unit 103 may generate update ratio information that indicates a history of changes of the ratio, based on the ratio of the to-be-updated information calculated for each of the areas in the map information or for each type of data in the map information.

Further, the generating unit 103 may generate update ratio information that urges the user to update the map information. Specifically, the generating unit 103 may generate update ratio information that informs the user of the update together with the ratio of the to-be-updated information.

The output unit 104 outputs the update ratio information generated by the generating unit 103 to a device that can process the map information. The output unit 104 may output information to a device or output information by audio or graphically.

Further, the output unit 104 may output the update ratio information based on device information received by the device information input unit 105 explained later. Specifically, the output unit 104 may output the update ratio information according to the date of updating, information concerning a current location of a device or apparatus, information concerning a destination, or information concerning a route in the device information received by the device information input unit 105.

The device information input unit 105 receives device information including a date of updating of the map information. The device information is, for example, information concerning the current location of the device, information concerning the destination of a mobile object on which the device is equipped, or information concerning a route along which the mobile object having the device moves.

(Processing of information processing apparatus)

Processing of the information processing apparatus 100 according to an embodiment will be explained. Fig. 2 is a flowchart of processing of the information processing apparatus. As depicted in Fig. 2, the update input unit 101 determines whether the update information concerning the updating of the map information has been received (step S201).

At step S201, once the update information has been received (step S201: YES), the calculating unit 102 calculates the ratio of the to-be-updated information over the map information, based on the update information received at step S201 (step S202).

The generating unit 103 generates the update ratio information indicating the ratio calculated at step S202 (step S203). Specifically, the generating unit 103 may generate information that indicates a history of changes of a ratio, based on a ratio for each area on a map or for each type of data in the map.

The output unit 104 outputs the update ratio information generated at step S203 to a device that can use the map information (step S204) and the entire process ends.

Although explanation was omitted with respect to the flowchart depicted in Fig. 2, when the device information input unit 105 receives the device information, the output unit 104 may output the update ratio information according to the device information at step S204.

It has been explained above that functions of the information processing apparatus, the information processing method, the information processing program and the computer-readable recording medium are implemented by the information processing apparatus 100 depicted in Fig. 1. However, not only the information processing apparatus 100 but multiple apparatuses including the units depicted in Fig. 1 may implement the functions. When multiple apparatuses are used, the apparatuses may be connected through a wire or wirelessly, or may be connected with a Bluetooth (registered trade mark) technique.

As explained above, according to the information processing apparatus, the information processing method, the information processing program and the computer-readable recording medium, appropriate update ratio information for the map information is output enabling optimal update of the map information.

(Example 1)

Example 1 of the embodiments will be explained. In Example 1, the information processing apparatus is implemented by a map data server that sends the map information to a navigation apparatus equipped on a mobile object such as a vehicle (including four-wheel vehicles, two-wheel vehicles).

(Hardware structure of map data server)

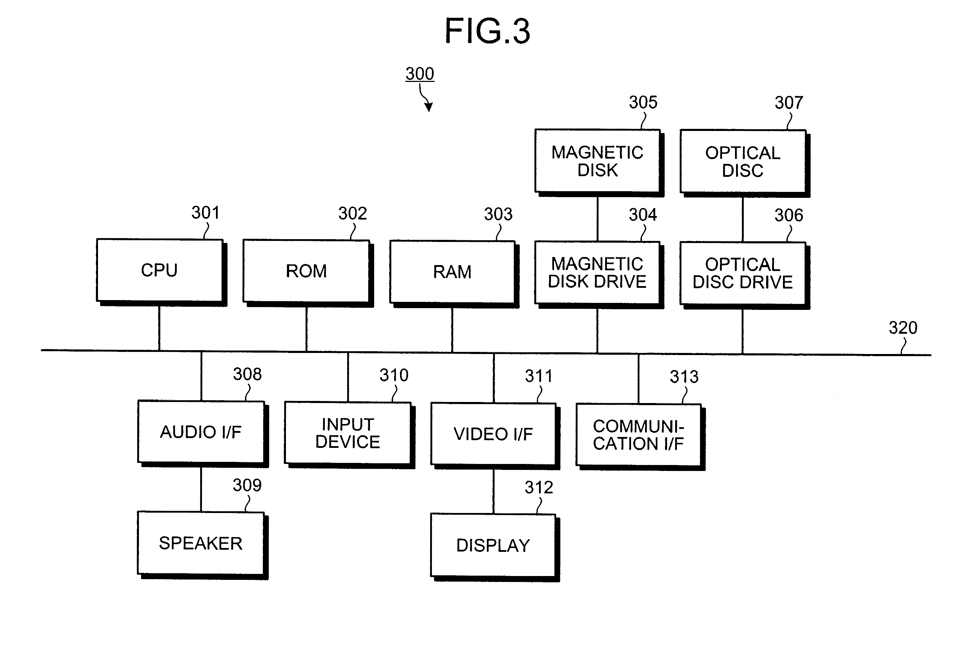

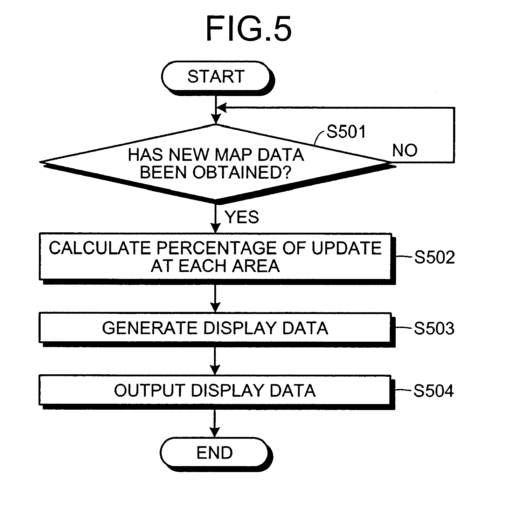

With reference to Fig. 3, a hardware configuration of the map data server according to Example 1 is explained. Fig. 3 is a block diagram depicting one example of a hardware structure of the map data server according to Example 1.
As depicted in Fig. 3, a map data server 300 includes a CPU 301, a ROM 302, a RAM 303, a magnetic disk driver 304, a magnetic disk 305, an optical disc drive 306, an optical disc 307, an audio I/F (interface) 308, a speaker 309, an input device 310, a video I/F 311, a display 312, and a communication I/F 313. The constituent units 301-313 are connected through a bus 320.
The CPU 301 governs overall control of the map data server 300. The ROM 302 stores therein various programs such as a boot program, an update program, an update ratio calculating program, and a data generating program. The RAM 303 is also used as a working area of the CPU 301.
The update program may cause the map data server to update map data stored in the magnetic disk 305 or the optical disc 307 which is described later, based on update map data that is input through the input device 310 or the communication I/F 313. Specifically, the update program updates old map data with data concerning, for example, new roads, revised traffic regulations, or new buildings.
The update ratio calculating program causes the information processing apparatus, for example, to calculate the ratio of map data to be updated by the update program. Detailed processing will be explained with reference to Fig. 5, Fig. 8, and Fig. 13. The update ratio calculating program causes the information processing apparatus to calculate the ratio of the map data that is updated from old map data.
When a version of the map data, data concerning a current location of a vehicle, or data concerning a route of the vehicle is obtained from a navigation apparatus equipped on the mobile object such as a vehicle via the communication I/F 313, the update ratio calculating program may cause the information processing apparatus to calculate the ratio of update based on the data concerning the current location or route.
For example, the update ratio may be calculated when it is determined, based on the version of the present map data and the data concerning the current location, that map data around the current location stored in the magnetic disk 305 or the optical disc 307 is a new version in comparison with the present map data.
More specifically, the update ratio may be calculated according to equation 1 below where R(%) is the update ratio, A is a total number of links included in a given area of the new map data (a new version of map data), and B is the number of links having IDs (Identifier) that also appear in the old version of map data when each of links (roads) in map data is given an ID:
$$R = 100 \times (A-B)/A \tag{1}$$

In a similar manner as equation 1, a POI (Point Of Interest) in map data may be used instead of the ID of a link.
As depicted in Fig. 3, the update ratio calculating program causes the information processing apparatus to calculate the ratio of the map data updated by the update program. However, the ratio may be calculated based on an amount of or a type of data to be updated as long as the amount of or the type of data to be updated is input through the input device 310 or the communication I/F 313 even if the updating is not caused by the update program.
The data generating program causes the information processing apparatus, for example, to generate various kinds of data using the update ratio calculated by the update ratio calculating program. Detailed processing will be described later with reference to Fig. 5, Fig. 8, and Fig. 13. The various kinds of data are, for example, display data that can be displayed by the navigation apparatus equipped on a vehicle. The various kinds of data are data that are output by the navigation apparatus and inform the user of the necessity of updating together with the update ratio.
The magnetic disk drive 304 controls the reading and writing of data with respect to the magnetic disk 305 under the control of the CPU 301. The magnetic disk 305 stores thereon the data written under the control of the magnetic disk drive 304. The magnetic disk 305 may be an HD (hard disk) or a FD (flexible disc).
One example of information stored in the magnetic disk 305 is map data. The map data includes background data representing features such as buildings, rivers, and ground surfaces, and road configuration data representing the configuration of roads. The map data is drawn on the display 312 two-dimensionally or three-dimensionally.

In Example 1, the map data is stored in the magnetic disk 305 but the map data may be stored in the optical disc 307. A storage area for the map data is not limited to those disposed integrally with the hardware of the map data server 300. A storage area for the map data may be set external of the map data server 300, where the map data server 300 obtains the map data, for example, through the communication I/F 313 via a network. The obtained map data is stored, for example, in the RAM 303.

The optical disc 306 controls the reading and writing of the data with respect to the optical disc 307 under the control of the CPU 301. The optical disc 307 is a removal recording medium from which data is read under the control of the optical disc drive 306. The optical disc 307 may be a writable recording medium. The removal recording medium may be a medium other than the optical disc 307, such as an MO and a memory card.

The audio I/F 308 is connected to the speaker 309 for audio output and the speaker 309 outputs sounds.

The input device 310 includes a remote controller, a keyboard, a mouse, a touch panel, etc. that are equipped with keys for entering characters, numeric values and various instructions.

The video I/F 311 is connected to the display 312. The video I/F 311 is made up of, for example, a graphic controller that controls the display 312, a buffer memory such as VRAM (Video RAM) that temporarily stores immediately displayable image information, and a control IC that controls the display 312 based on image data output from the graphic controller.

The display 312 displays icons, cursors, menus, windows, or various data such as text and images. A CRT, a TFT liquid crystal display, a plasma display, etc. may be employed as the display 312.

The communication I/F 313 wirelessly communicates with a network and serves as an interface between the map information server 300 and the CPU 301. Further, the communication I/F 313 communicates with a system of networks such as the Internet and also servers as an interface between the system of networks and the CPU 301.

The system of networks includes a LAN, a WAN, a public line network, a mobile telephone network and so on. Specifically, the communication I/F 313 is made up of, for example, a tuner that can receive terrestrial digital broadcasting program, analog TV broadcasting program, or FM radio program.

In Example 1, the map data server 300 transmits and receives various data to/from the navigation apparatus equipped on a vehicle. However, the map data server 300 may communicate with a mobile phone or PC (personal computer) of the user. Further, in Example 1, the map data is taken as an example but any data that can be upgraded may be used instead of the map data. For instance, an application distributing server instead of the map data server 300 may distribute an application that can be run by the PC; whereby calculation of an update ratio or output of update ratio information for a version upgrade of the application is performed.

The update information input unit 101, the calculating unit 102, the generating unit 103, the output unit 104, and the device information input unit 105 of the information processing unit 100 depicted in Fig. 1 may be implemented by the CPU 301 executing a given program using programs and data stored in the ROM 302, the RAM 303, the magnetic disk 305, or the optical disc 307 of the map data server 300 depicted in Fig. 3 and by the CPU 301 controlling each unit of the map data server 300.

In other words, the map data server 300 according to Example 1 executes various programs stored in the ROM 302 and performs the functions of the information processing apparatus 100 depicted in Fig. 1 according to the procedure depicted in Fig. 2.

(Overview of data representing update ratio)

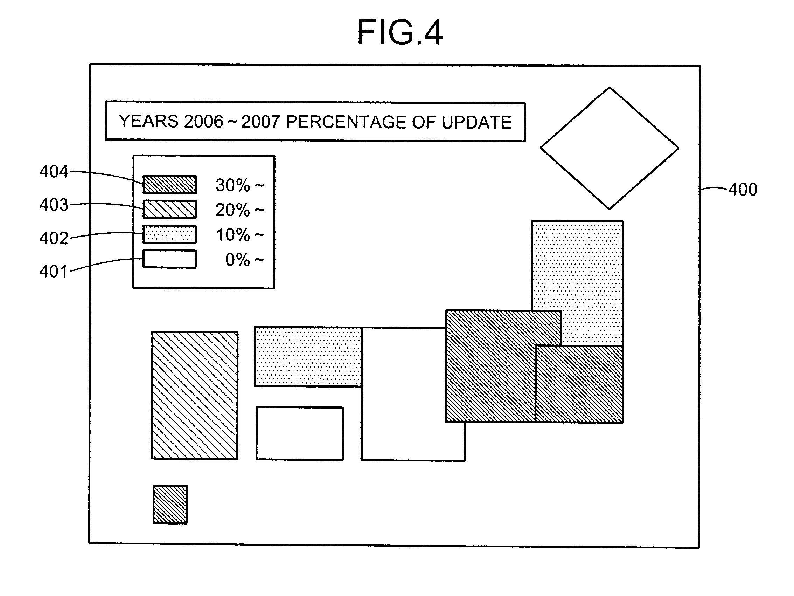

With reference to Fig. 4, an outline of the data representing an update ratio in the map data server 300 according to Example 1 will be explained. Fig. 4 is a diagram depicting one example of display data representing an update ratio in the map data server according to Example 1.

As depicted in Fig. 4, display data 400 is data that can be displayed by the display 312 and is assumed to be in a displayed state. The display data 400 is made up of an area 401 in which an update ratio is at least 0% but less than 10%, an area 402 in which an update ratio is at least 10% but less than 20%, an area 403 in which an update ratio is at least 20% but less than 30%, and an area 404 in which an update ratio is at least 30%.

Each update ratio in the display data 400 has been updated between from years 2006 to 2007. The user compares the display data 400 with an area mainly used by the user and determines whether the updating of the map data is useful for the user.

In particular, when the display data 400 is output to the navigation apparatus equipped on a vehicle and the user confirms the display data 400, map data used for the navigation apparatus can be properly updated. The updating of map data may be done by the user operating the navigation apparatus to send an update request to the map data server 300 (this case is not depicted in the drawings).

(Process at map data server 300)

With reference to Fig. 5, processing of the map data server 300 according to Example 1 will be explained. Fig. 5 is a flowchart depicting processing of the map data server. As depicted in the flowchart of Fig. 5, it is determined whether new map data has been obtained from a server distributing new map data (not depicted) via the communication I/F 313 (step S501). The new map data may be data that causes the map data server 300 to update map data. The new map data may be received by the input device 310 instead of being obtained via the communication I/F 313.

At step S501, waiting occurs until the new map data is obtained. When the new map data is obtained (step S510: YES), the CPU 301 calculates an update ratio for each area in the map data (step S502). The update ratio is calculated, for example, based on the map data stored on the magnetic disk 305 and the optical disc 307 and based on the new map data obtained at step S501.

The CPU 301 generates display data representing the update ratio based on the update ratio calculated at step S502 (step S503). The display data may be the display data 400 depicted in Fig. 4 and be displayed on the display 312.

The display data is output to the display 312 via the video I/F 311 (step S504), and the processing ends.

In the flowchart of Fig. 5, the display 312 displays the display data. However, the display data may be output to the navigation apparatus via the communication I/F 313. In this way, the user of the navigation apparatus can confirm the display data and determine whether the updating of the map data of the navigation apparatus is needed.

(Another example of display data)

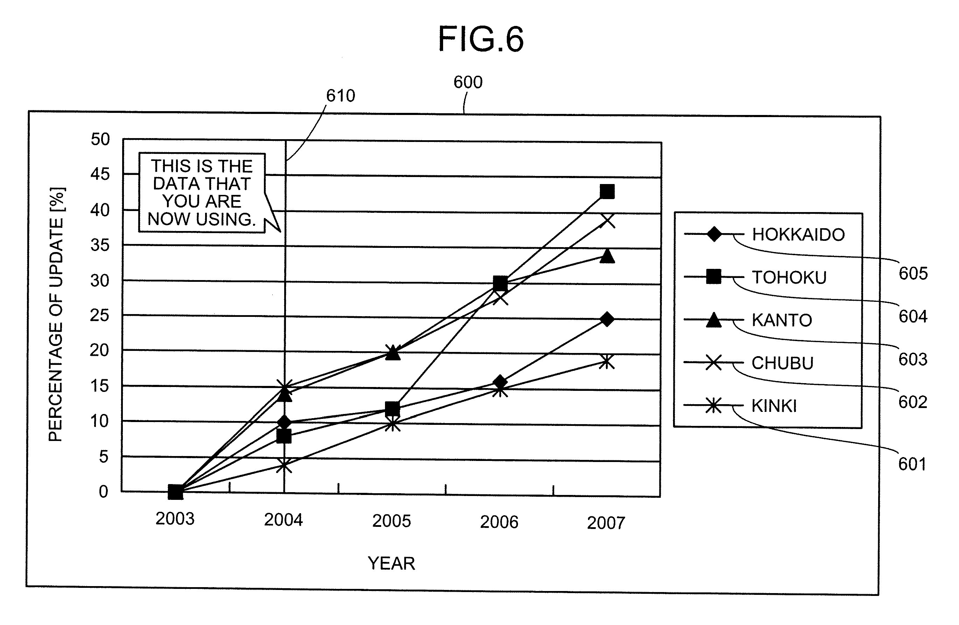

With reference to Fig. 6, another example of display data depicting the update ratio of the map data server 300 is explained. Fig. 6 is a diagram of one example of display data depicting the update ratio of the map data server according to Example 1.

As depicted in Fig. 6, display data 600 is data that may be displayed on a display of a navigation apparatus equipped on a vehicle. In Fig. 6, the display data 600 is in a displayed state. The display data 600 is a graph illustrating changes of an update ratio from fiscal years 2003 to 2007 for a Kinki region 601, a Chubu region 602, a Kanto region 603, a Tohoku region 604, and a Hokkaido region 605.

A version year 610 is illustrated in Fig. 6. Data concerning a version of the map data used in the navigation apparatus is obtained from the user of the navigation apparatus. The display data 600 presents the version year 610 and the update ratio in such a manner that the user can easily recognize how old current map data is and which region should be updated; whereby the user is motivated to perform an updating process.

In the explanation of Fig. 6, the display data 600 is generated in which the update ratio in fiscal year 2003 has been set to 0 (zero). However, the update ratio at a version year 610 or the update ratio before fiscal year 2003 may be set to 0 (zero).

As explained above, according to the map data server of Example 1, the display data illustrating the update ratio of the map data is generated and output; whereby the user can properly judge the necessity of updating of the map data.

In addition, the display data enables easy recognition of the update ratio for each area and easy recognition of changes of the update ratio. Consequently, the user can correctly judge the necessity of updating; thereby optimizing the update of map data.

Example 2

Example 2 of the present embodiments will be explained. In Example 2, the map data server 300 creates and outputs guide data for the updating of map data based on a current location of a navigation apparatus of a user instead of the display data 400, 600. Functional configuration of the map data server 300 according to Example 2 is identical to the configuration depicted in Fig. 3 and thus, the explanation thereof is omitted.

(Overview of guide data for updating)

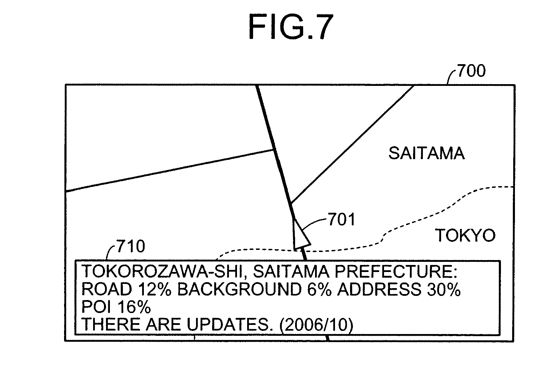

With reference to Fig. 7, an overview of the guide data generated by the map data server 300 according to Example 2 will be explained. Fig. 7 is a diagram depicting one example of guide data for the updating of map data, according to Example 2.

As depicted in Fig. 7, guide data 700 may be displayed on the display of the navigation apparatus equipped on a vehicle. In Fig. 7, the guide data 700 is in a displayed state. The guide data 700 includes a current location 701 of the vehicle on which the navigation apparatus is equipped, and update ratio information 710 indicating the update ratio in an area including the current location 701.

Specifically, the guide data 700 is generated by the map data server 300 receiving a version of the map data used in the navigation apparatus and a current location from the navigation apparatus. The guide data 700 is output to the navigation apparatus.

More specifically, the guide data 700 may be generated when the map data at the current location indicates an area where the update ratio is high.

The update ratio information 710 may give an update ratio that has been calculated for each data type such as data concerning roads or data concerning backgrounds, or the update ratio information 710 may give an update ratio for all data collectively such as data concerning roads and data concerning backgrounds. When the map is divided in a grid pattern, the update ratio of the update ratio information 710 may be calculated for each unit of the grid to facilitate processing.

The user of the navigation apparatus confirms the guide data 700 and judges whether it is appropriate for the user to update the current map data; whereby optimal updating is conducted. A person using the map data server 300 may confirm the guide data for each navigation apparatus on the display 312 and urge the updating instead of the judgment by the user of the navigation apparatus.

(Processing of map data server 300)

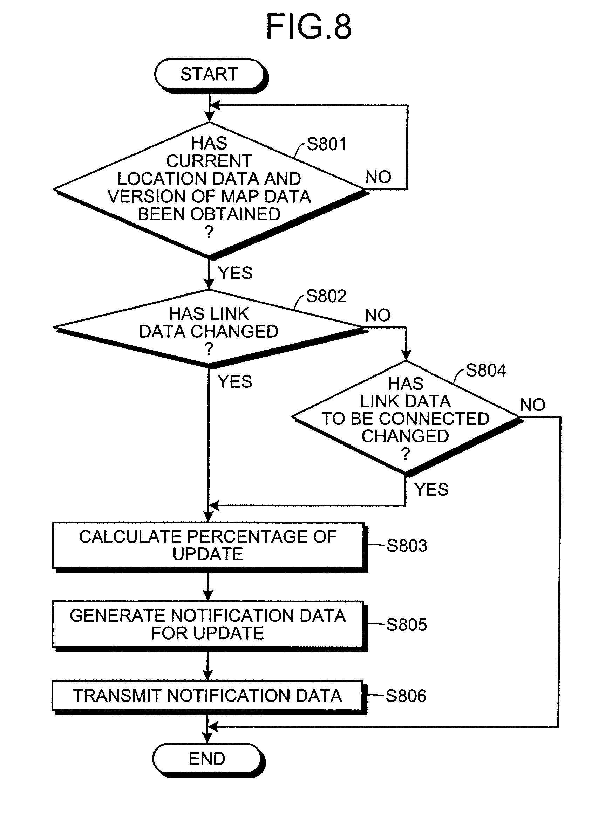

With reference to Fig. 8, processing of the map data server 300 according to Example 2 will be explained. Fig. 8 is a flowchart of processing of the map data server according to Example 2. As depicted in the flowchart of Fig. 8, it is determined whether the current location data and the version of the current map data have been obtained via the communication I/F 313 (step S801).

The current location data and the version of the current map data may be transmitted when the vehicle on which the navigation apparatus is equipped begins to move or when the vehicle enters a given area. The current location data and the version of the map data may be received from a navigation apparatus responding to a request which has been distributed by the map data server 300.

At step S801, waiting occurs until the current location data and the version of the map data are obtained. When the current location data and the version of the map data are obtained (step S801: YES), the CPU 301 determines whether link data of the current location has changed (step S802). Specifically, the CPU 301 refers to the version of the map data obtained at step S801 and determines whether the link data of the current location in the latest map data has changed.

The link data is, for example, data representing multiple nodes and roads connecting the nodes in the road configuration data. A node denotes an intersection such as a junction of three roads such as a T-shaped intersection, a crossroad, a junction of five roads and so on where multiple roads meet. A road is expressed by a link. Some links includes a shape interpolation point, with which a curved road can be expressed.

At step S802, if it is determined that the link data has changed (step S802: YES), the CPU 301 calculates the update ratio (step S803). Specifically, with reference to the version of the map data obtained at step S801, the update ratio of a case where the map data is updated to the latest version is calculated.

At step S802, if it is determined that the link data has not changed (step S802: NO), the CPU 301 determines whether link data connecting to the link of the current location has changed (step S804).

At step S804, if it is determined that the link data has not changed (step S804: NO), the processing ends. In other words, the map data currently used in the navigation apparatus does not need updating. The navigation apparatus may be informed that the updating is not necessary.

At step S804, if it is determined that the link data has changed (step S804: YES), the processing goes to step S803 and the CPU 301 calculates the update ratio (step S803).

The CPU 301 generates guide data for updating using the update ratio calculated at step S803 (step S805). The guide data is, for example, the guide data 700 depicted in Fig. 7 which can be displayed on the display 312 or the display of the navigation apparatus.

The guide data generated at step S805 is transmitted to the navigation apparatus via the communication I/F 313 (step S806) and the processing ends. Specifically, the guide data is transmitted to the navigation apparatus which provided the current location data and the version of the map data at step S801.

In the explanation of the flowchart of Fig. 8, the guide data is generated at step S805 using the calculated update ratio. However, the guide data may be generated only when the update ratio is large. In other words, when the current map data does not need updating, the processing may end without generating the guide data.

In this way, when updating is clearly unnecessary, communication with the navigation apparatus may be omitted; whereby communication load can be reduced. Further, a decision that the guide data is not generated can be made only based on comparison of the update ratio with a given threshold, enabling work load on the map data server 300 to be reduced.

In the flowchart of Fig. 8, the guide data is transmitted at step S806. However, it suffices to transmit the update ratio information. In other words, at step S805, the update ratio information 710 may be generated based on the update ratio and at step S806, the update ratio information 710 may be transmitted. In this way, the data generating process at step S805 is simplified and the amount of data dealt with at each step is reduced.

In the flowchart of Fig. 8, the link data is used; however, background data or POI maybe used. In this way, versatility of the update ratio increases and the update ratio can be checked from various viewpoints.

(Another example of guide data for updating)

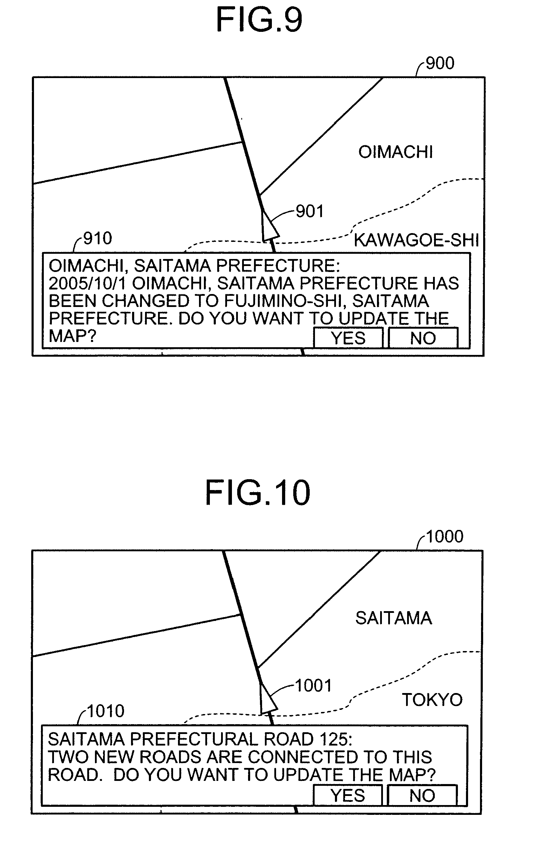

With reference to Fig. 9 and Fig. 10, another example of guide data for updating of map data generated at the map data server 300 will be explained. Fig. 9 is a diagram of another example of guide data for updating map data, according to Example 2.

As depicted in Fig. 9, guide data 900 is data that can be displayed on a display of, for example, the navigation apparatus equipped on a vehicle. In the explanation of Fig. 9, the guide data is in a displayed state. The guide data 900 includes a current location 901 of a vehicle on which the navigation apparatus is equipped, and update guide information 910 indicating the updating of an area including the current location 901.

As depicted in Fig. 9, instead of calculating the update ratio, the map data server 300 determines whether administrative boundaries have changed based on the current location data and the version of the map data obtained from the navigation apparatus. When the administrative boundaries have changed, the map data server 300 generates and outputs the guide data 900, displaying the update guide information 901 for the user of the navigation apparatus to update the map data.

Fig. 10 is a diagram of another example of guide data for updating map data, according to Example 2.

Guide data 1000 is data that may be displayed on a display of the navigation apparatus equipped on a vehicle. The guide data 1000 is in a displayed state. The guide data 1000 includes a current location 1001 of the vehicle on which the navigation apparatus is equipped and update guide information 1010 informing the user of changes of an area including the current location 1001.

As depicted in Fig. 10, instead of calculating the update ratio, the map data server 300 determines whether a new road has been built, based on the current location data and the version of the map data obtained from the navigation apparatus. If the map data server 300 determines that a new road has been built, the map data server 300 generates and outputs the guide data 1000, displaying the update guide information 1010 that urges the user of the navigation apparatus to update the map data.

As depicted in Fig. 9 and Fig. 10, generating the guide data 900, 1000 based on changes of administrative boundaries or newly built roads instead of calculating the update ratio can reduce loads of calculating the update ratio. In other words, when updating is clearly necessary, for example, when administrative boundaries have changed or new roads have been built, the guide data 900, 1000 is generated and output without calculating the update ratio enabling the need for updating to be efficiently conveyed.

According to Example 2, the map data server 300 transmits and receives various data with respect to the navigation apparatus equipped on the vehicle. However, the map data server 300 may communicate with a mobile terminal or a PC (personal computer) of the user. Further, although Example 2 explains the map data, any data that can be updated may be used instead of the map data. For example, an application that can be run on the PC may be distributed instead of map data on the map data server 300. In this case, calculation of an update ratio or output of update ratio information may be performed for upgrading the application.

As explained, according to the navigation apparatus of Example 2, the guide data for updating is generated and output based on the current location of the vehicle on which the navigation apparatus is equipped, enabling the user to correctly judge the necessity of updating the map information of the current location.

Namely, the necessity of updating the map data is judged in real time and thus optimal map data is used by the navigation apparatus.

Further, even without the update ratio, the guide data is generated and output based on changes of administrative boundaries or newly built roads, and thus processing loads at the map data server can be reduced and the processing is sped up.

Example 3

Example 3 of the present embodiments will be explained. In Example 3, the map data server 300 of Example 1 and Example 2 generates and outputs guide data for updating map data, based on a route up to a destination of a vehicle instead of the current location of the vehicle on which a navigation apparatus is equipped. Functional configuration of a map data server 300 according to Example 3 is identical to the configuration depicted in Fig. 3 and thus the explanation thereof is omitted.

(Overview of guide data for updating)

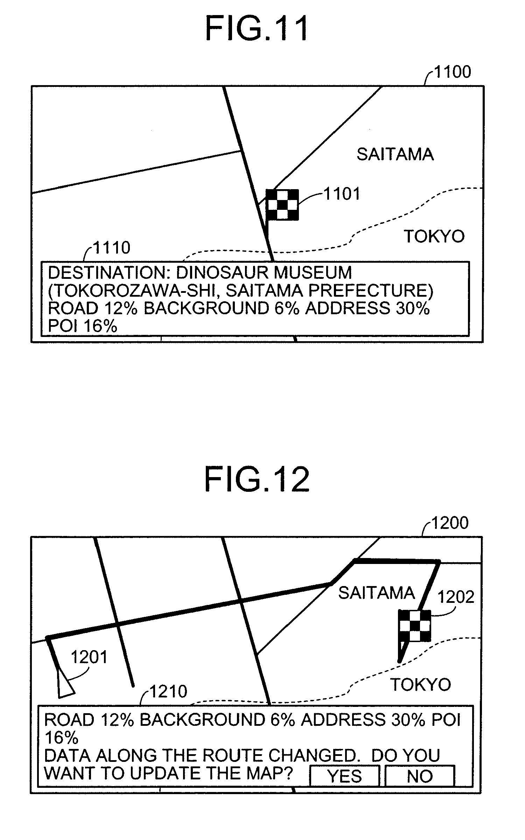

With reference to Fig. 11 and Fig. 12, an overview of the guide data generated by the map data server 300 according to Example 3 will be explained. Fig. 11 is a diagram of one example of guide data for updating map data, according to Example 3.

As depicted in Fig. 11, guide data 1100 is data that may be displayed on a display of the navigation apparatus equipped on the vehicle. In Fig. 11, the guide data 1100 is in a displayed state. The guide data 1100 includes a destination 1101 of the vehicle on which the navigation apparatus is equipped and update ratio information 1110 indicating an update ratio for an area including the destination 1101.

Specifically, the map data server 300 generates the guide data 1100 based on route data including the destination and a version of the map data used in the navigation apparatus, the route data and the version of the map data being received by the map data server from the navigation apparatus. The guide data 1100 is output to the navigation apparatus.

More specifically, the guide data 1100 may be generated when the map data at the destination is within an area in which the update ratio is high.

Fig. 12 is a diagram of one example of guide data, according to Example 3.

As depicted in Fig. 12, guide data 1200 is data that mat be displayed on a display of a navigation apparatus equipped on a vehicle. In Fig. 12, the guide data 1200 is in a displayed state. The guide data 1200 includes a current location 1201 of the vehicle, a destination 1202 of the vehicle, and update guide information 1210 informing a user of changes of an area including a route from the current location 1201 to the destination 1202.

Specifically, the map data server 300 generates the guide data 1200 based on the route data including the destination and a version of the map data used in the navigation apparatus, the route data and the version of the map data being received by the map data server from the navigation apparatus. The guide data 1200 is output to the navigation apparatus. The route data includes, for example, a shape of route or a road to be crossed.

More specifically, the guide data 1200 may be generated when the map data for a passing area that includes the route along which the vehicle will travel and where the update ratio is high.

In the explanation of Fig. 11 and Fig. 12, the map data server 300 obtains the route data from the navigation apparatus. However, instead of the route data, the map data server 300 may obtain data of a start point (current location) and a destination to search for a route and calculate an update ratio of an area including the route. In this way, processing of the navigation apparatus is simplified and the guide data based on the latest version of the map data can be provided.

As explained, the user of the navigation apparatus confirms the guide data 1100, 1200 depicted in Fig. 11 and Fig. 12 and judges whether updating the map data is appropriate for the user; thereby the updating is optimized. Instead of judgment by the user of the navigation apparatus, a person using the map data server 300 may confirm the guide data for each navigation apparatus on the display 312 and urge the updating.

(Processing of the map data server 300)

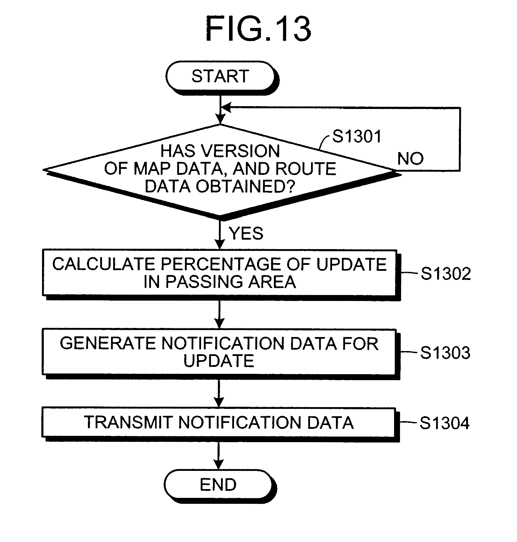

With reference to Fig. 13, processing of the map data server 300 according to Example 3 will be explained. In Example 3, the map data server 300 acquires route data from the navigation apparatus. Fig. 13 is a flowchart of processing of the map data server according to Example 3. According to the flowchart of Fig. 13, it is determined whether route data and a version of map data currently used by the navigation apparatus have been obtained from the navigation apparatus (not depicted) via the communication I/F 313 (step S1301).

The route data and the version of the map data may be transmitted by the navigation apparatus when the navigation apparatus begins to move or when the navigation apparatus sets a destination. The map data server 300 may distribute a request for data to navigation apparatuses and receive the route data and the version of the map data from a navigation apparatus that responds to the request.

At step S1301, waiting occurs until the route data and the version of the map data have been obtained. When the route data and the version of the map data have been obtained (step S1301: YES), the CPU calculates an update ratio of a passing area (step S1302). The update ratio is a ratio of data to be updated when data of the passing area which the vehicle passes is updated to the latest map data with reference to the route data and the version of the map data obtained at step S1301.

The CPU 301 generates guide data for updating using the update ratio calculated at step S1302 (step S1303). The guide data for updating is, for example, the guide data 1100, 1200 depicted in Fig. 11 or Fig. 12, and is data that can be displayed by the display 312 or a display of the navigation apparatus.

The guide data generated at step S1303 is transmitted to the navigation apparatus via the communication I/F 313 (step S1304) and the processing ends. Specifically, the guide data is transmitted to the navigation apparatus from which the route data and the version of the map data have been obtained at step S1301.

According to the flowchart of Fig. 13, the guide data is generated at step S1303 with the update ratio calculated at step S1302. However, the guide data may be generated when the update ratio is large, i.e., when the updating of the map data for the navigation apparatus is not necessary, the process may end without generating the guide data.

Thus, when the updating is not needed, the communication need not be established with the navigation apparatus, thereby the communication load can be reduced. In addition, the generation of the guide data is determined based on the comparison of the update ratio with a given threshold, thereby the processing load of the map data server 300 can be reduced.

In Example 2, although the map data server 300 transmits and receives various data with respect to a navigation apparatus equipped on a vehicle, transmission and reception of various data may be respect to a mobile terminal or PC (person computer).

As explained, according to the navigation apparatus according to Example 3, the navigation data is generated and output based on the route data of the vehicle on which the navigation apparatus is equipped. Consequently, the user can properly determine whether update of the map data of the passing area is necessary.

In other words, the user can evaluate the need for and prioritize the updating of the map data along the route up to the destination.

According to the present invention, adequate update ratio information concerning map information is output and thus the updating is optimized.

Further, according to the present invention, the display data for illustrating the update ratio of the map data is generated and output, enabling the user to properly judge the necessity of the updating of the map data.

The user can easily recognize the update ratio for each area or the history of changes of the update ratio and correctly judge whether the updating of data is necessary, thereby the updating of the map data is optimized.

According to the present invention, the guide data for updating is generated based on the current location of the vehicle having the navigation apparatus and is output; whereby the user can properly judge the necessity of the updating of the map data.

The necessity of the updating of the map data is judged in real time and thus, the map data used in the navigation apparatus is optimized.

Even without the update ratio, the guide data is generated based on the changes of the administrative boundaries or newly built roads, whereby the processing load of the map data server is reduced and the processing is sped up.

Although Examples 1, 2, and 3 explain the communication with the navigation apparatus equipped on the vehicle, communication may be established with a mobile terminal of the user or the PC (personal computer); whereby the versatility of the present invention expands.

Although Examples 1, 2, and 3 explain the updating of the map data, any data that can be updated may be used. For instance, a server for distributing applications instead of the map data server may distribute applications that can be run by a PC, and for version upgrade, calculation of an update ratio or output of update ratio information may be performed.

Instead of the map data server depicted in Examples 1 to 3, a navigation apparatus may calculate an update ratio or output update ratio information concerning map data of another navigation apparatus. Specifically, when among plural navigation apparatuses, at least one possesses the functions described in Examples 1 to 3, the navigation apparatus may calculate an update ratio or output update ratio information of the map data which another navigation apparatus is using. In this case, if another navigation apparatus uses a new version of map data compared to the navigation apparatus of Examples 1 to 3, the necessity of version upgrade is recognized at the navigation apparatus of Examples 1 to 3. If another navigation apparatus uses an old version of map data, the necessity of version upgrade is recognized at that navigation apparatus. Usually, a navigation apparatus does not have much memory or processing capacity compared to a server. Therefore, part of the map data may be transferred to one navigation apparatus to calculate an update ratio. The map data server may store a latest map and a navigation apparatus may calculate an update ratio or output update ratio information for the map data the navigation apparatus possesses and the map data the map data server possesses. Specifically, for example, the map data server may transmit at least part of the map data to a navigation apparatus, which calculates an update ratio or outputs update ratio information. In this case, the entire area of a map that the map data server stores may be transmitted but transmission of part of the data reduces loads on the navigation apparatus.

The present invention may have functions depicted in at least one of Examples 1 to 3. Specifically, for example, when a navigation apparatus is powered on at a vehicle, a user may be urged to update data by functions depicted in Example 1. As the vehicle moves and a current location changes, the user may be urged to update data by functions depicted in Example 2. When a destination is set, the user may be urged by functions depicted in Example 3. In this way, as circumstances concerning the navigation apparatus change, the user may be informed of updating of data; whereby updating of map data is optimized.

The information processing method explained in the present embodiments can be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program can be distributed through a network such as the Internet.

**Claims**

1. An information processing apparatus comprising:

   an input unit configured to receive update information on updating of map information;
   a calculating unit configured to calculate a ratio of information to be updated in the map information based on the update information;
   a generating unit configured to generate update ratio information indicating the ratio calculated by the calculating unit;
   an output unit configured to output the update ratio information generated by the generating unit to a device that uses the map information.

2. The information processing apparatus according to claim 1, wherein
   the calculating unit calculates, for each of a plurality of areas in the map information, the ratio of the information to be updated.

3. The information processing apparatus according to claim 1, wherein
   the calculating unit calculates, for each of types of data in the map information, the ratio of the information to be updated.

4. The information processing apparatus according to claim 1, wherein
   the generating unit generates the update ratio information indicating a history of changes of the ratio of the information to be updated.

5. The information processing apparatus according to claim 1, wherein
   the input unit receives device information that includes a update date of utilization map information of the device, and
   the calculating unit calculates the ratio of information to be updated in the utilization map information based on the update date of the device information received by the input unit.

6. The information processing apparatus according to claim 1, wherein
   the input unit receives the device information including current location information on a current location of the device and
   the output unit outputs the update ratio information based on the current location information received by the input unit.

7. The information processing apparatus according to claim 1, wherein
   the input unit receives the device information including destination information on a destination of a mobile object on which the device is equipped, and
   the output unit outputs the update ratio information based on the destination information received by the input unit.

8. The information processing apparatus according to claim 1, wherein
   the input unit receives the device information including route information on a route of a mobile object on which the device is equipped, and
   the output unit outputs the update ratio information based on the route information received by the input unit.

9. The information processing apparatus according to claim 5, wherein
   the generating unit generates the update ratio information that urges updating of the utilization map information.

10. An information processing method comprising steps of:

    a receiving step of receiving update information on updating of map information;
    a calculating step of calculating a ratio of information to be updated in the map information based on the update information receiving at the receiving step;
    a generating step of generating update ratio information indicating the ratio calculated at the calculating step;
    an outputting step of outputting the update ratio information generated at the generating step to a device that uses the map information.

**11.** An information processing program causing a computer to perform the information processing method according to claim 10.

**12.** A computer-readable recording medium storing the information processing program according to claim 11.

# FIG.1

100

| | | | | |
|---|---|---|---|---|
| 101 | | 102 | 103 | 104 |
| UPDATE INPUT UNIT | | CALCULATING UNIT | GENERATING UNIT | OUTPUT UNIT |
| 105 | | | | |
| DEVICE INFORMATION INPUT UNIT | | | | |

# FIG.2

START

HAS UPDATE BEEN RECEIVED? — S201 — NO

YES

CALCULATE RATIO OF UPDATE — S202

GENERATE UPDATE RATIO INFORMATION — S203

OUTPUT UPDATE RATIO INFORMATION — S204

END

# FIG.3

EP 2 103 906 A1

# FIG.4

YEARS 2006 ~ 2007 PERCENTAGE OF UPDATE

404 — 30% ~
403 — 20% ~
402 — 10% ~
401 — 0% ~

400

EP 2 103 906 A1

# FIG.5

START

S501
HAS NEW MAP DATA
BEEN OBTAINED? —— NO

YES

CALCULATE PERCENTAGE OF UPDATE
AT EACH AREA —— S502

GENERATE DISPLAY DATA —— S503

OUTPUT DISPLAY DATA —— S504

END

# FIG.6

# FIG.7

SAITAMA

701

TOKYO

710

700

TOKOROZAWA-SHI, SAITAMA PREFECTURE:
ROAD 12% BACKGROUND 6% ADDRESS 30%
POI 16%
THERE ARE UPDATES. (2006/10)

# FIG.8

START

HAS CURRENT LOCATION DATA AND VERSION OF MAP DATA BEEN OBTAINED ? — S801

NO

YES

HAS LINK DATA CHANGED ? — S802

NO

YES

HAS LINK DATA TO BE CONNECTED CHANGED ? — S804

NO

YES

CALCULATE PERCENTAGE OF UPDATE — S803

GENERATE NOTIFICATION DATA FOR UPDATE — S805

TRANSMIT NOTIFICATION DATA — S806

END

# FIG.9

900

OIMACHI

901

910 KAWAGOE-SHI

OIMACHI, SAITAMA PREFECTURE:
2005/10/1 OIMACHI, SAITAMA PREFECTURE HAS
BEEN CHANGED TO FUJIMINO-SHI, SAITAMA
PREFECTURE. DO YOU WANT TO UPDATE THE
MAP?               | YES | NO |

# FIG.10

1000

SAITAMA

1001

1010 TOKYO

SAITAMA PREFECTURAL ROAD 125:
TWO NEW ROADS ARE CONNECTED TO THIS
ROAD.  DO YOU WANT TO UPDATE THE MAP?
               | YES | NO |

# FIG.11

1100

SAITAMA

1101

1110

TOKYO

DESTINATION: DINOSAUR MUSEUM
(TOKOROZAWA-SHI, SAITAMA PREFECTURE)
ROAD 12% BACKGROUND 6% ADDRESS 30%
POI 16%

# FIG.12

1200

SAITAMA 1202

1201

1210

TOKYO

ROAD 12% BACKGROUND 6% ADDRESS 30% POI
16%
DATA ALONG THE ROUTE CHANGED. DO YOU
WANT TO UPDATE THE MAP? | YES | NO

# FIG.13

```
          ┌─────────────┐
          │    START    │
          └─────────────┘
                 │
                 ▼
              ╱─────╲
            ╱  HAS VERSION  ╲──── S1301
          ╱  OF MAP DATA, AND ROUTE ╲    NO
          ╲  DATA OBTAINED?  ╱
            ╲─────────────╱
                 │ YES
                 ▼
    ┌───────────────────────────┐
    │ CALCULATE PERCENTAGE OF UPDATE │── S1302
    │      IN PASSING AREA      │
    └───────────────────────────┘
                 │
                 ▼
    ┌───────────────────────────┐
    │ GENERATE NOTIFICATION DATA FOR │── S1303
    │          UPDATE           │
    └───────────────────────────┘
                 │
                 ▼
    ┌───────────────────────────┐
    │   TRANSMIT NOTIFICATION DATA   │── S1304
    └───────────────────────────┘
                 │
                 ▼
          ┌─────────────┐
          │     END     │
          └─────────────┘
```

## INTERNATIONAL SEARCH REPORT

| | International application No. |
| --- | --- |
| | PCT/JP2007/050345 |

**A. CLASSIFICATION OF SUBJECT MATTER**
*G01C21/00(2006.01)i, G08G1/0969(2006.01)i*

According to International Patent Classification (IPC) or to both national classification and IPC

**B. FIELDS SEARCHED**

Minimum documentation searched (classification system followed by classification symbols)
G01C21/00, G08G1/0969

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2004-37331 A  (Alpine Electronics, Inc.),<br>05 February, 2004 (05.02.04),<br>Par. Nos. [0033] to [0042]; Figs. 3 to 5<br>& US 2004/117110 A1 | 1-12 |

☐ Further documents are listed in the continuation of Box C.　　☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 06 April, 2007 (06.04.07) | 17 April, 2007 (17.04.07) |

| Name and mailing address of the ISA/<br>Japanese Patent Office | Authorized officer |
| --- | --- |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004012319 A
- JP 2005091071 A